# EUROPEAN PATENT SPECIFICATION

(11) **EP 2 627 957 B1**
(45) Date of publication and mention of the grant of the patent: **06.11.2019**
(21) Application number: 11832695.8
(22) Date of filing: 20.09.2011
(51) Int. Cl.: F25D 23/06, C03C 27/06

(54) **VACUUM INSULATION GLASS PANEL AND REFRIGERATOR HAVING THE SAME**
VAKUUMISOLATIONS-GLASSCHEIBE UND KÜHLSCHRANK DAMIT
PANNEAU EN VERRE D'ISOLATION SOUS VIDE ET RÉFRIGÉRATEUR ÉQUIPÉ DE CE DERNIER

(30) Priority: 05.11.2010 KR 20100110044; 05.11.2010 KR 20100110043; 11.10.2010 KR 20100098928; 11.10.2010 KR 20100098926; 11.10.2010 KR 20100098921
(43) Date of publication of application: 21.08.2013
(73) Proprietor: LG Electronics Inc., Seoul 07336 (KR)
(72) Inventor: YOON, Ilseob, Gyeongnam 641-711 (KR); KIM, Youngbae, Gyeongnam 641-711 (KR); SOH, Jaehyun, Gyeongnam 641-711 (KR)
(74) Representative: Ter Meer Steinmeister & Partner
(86) International application number: PCT/KR2011/006946
(87) International publication number: WO 2012/050308

(56) References cited:
- EP-A1- 1 630 344
- EP-A2- 2 099 996
- JP-A- H11 278 877
- JP-A- 2000 063 156
- JP-A- 2002 071 088
- JP-B2- 4 503 856
- US-A- 5 027 574
- US-A1- 2006 207 218

## Description

### TECHNICAL FIELD

The present disclosure relates to a vacuum insulation glass panel and a refrigerator having the same.

### BACKGROUND ART

In general, a refrigerator includes a plurality of storage spaces for keeping foods therein, and a refrigerant compression cycle apparatus for maintaining the storage spaces in a predetermined temperature range by supplying cold air into the storage spaces. The plurality of storage spaces are generally maintained in a temperature range lower than external air. Hence, in order to minimize energy consumption, heat transfer from the exterior should be minimized. For this, the refrigerator has an insulation unit.

The related art has used, as the insulation unit, a urethane foam formed between a cabinet and a storage space of the refrigerator, and a vacuum insulation panel attached onto the cabinet.

In recent time, a vacuum insulation glass panel is often used, in addition to the foam and the vacuum insulation panel. The vacuum insulation glass panel is superior to the vacuum insulation panel in view of an outer appearance, so it can be used for an outer wall of a building or a door of a refrigerator. Especially, when the vacuum insulation glass panel is used for the refrigerator door, foods stored in the refrigerator can be recognized without opening the door, resulting in improvement of convenience in use and reduction of energy loss.

The vacuum insulation glass panel has a structure of bonding two sheets of glass panels, which are supported by spacers with a space defined therebetween, using a glass frit, with maintaining the space in a vacuum state. However, the vacuum insulation glass panel has a problem of low productivity, caused by a process of bonding those glass panels using the glass frit, which takes a considerable time.

Furthermore, the vacuum insulation glass panel exhibits an insulation performance lower than that of an insulation unit having the foam and the vacuum insulation panel. Also, the vacuum insulation glass panel has lower transparency than that of general glass, consequently, it is not easy to recognize foods inside.

US 2006/0207218 A1 discloses a vacuum insulated glass panel according to the preamble of claim 1 and describes a glass panel comprising a pair of glass plates opposed to each other, spacers disposed between the pair of glass plates for maintaining a gap therebetween, and a sealing member having a lower melting point than the glass plates for sealing the pair of glass plates at outer peripheries thereof to form a decompression void between the pair of glass plates. In examples, the sealing member is made of epoxy resin.

US 5027574 A describes a thermally insulating panel structure having two panels and a seal at the edges of the panels.

EP 1630344 A1 describes a vacuum insulating glazing panel having a hermetic seal for sealing off a low pressure space formed between two sheets of glass.

EP 2099996 A2 relates to a thermally insulating glazing element having glass plates and edge seal means.

### DISCLOSURE OF THE INVENTION

Therefore, to obviate those problems, an aspect of the detailed description is to provide a vacuum insulation glass panel capable of shortening a manufacturing time as compared with the related art and exhibiting an excellent insulation performance.

Another aspect of the detailed description is to provide a vacuum insulation glass panel capable of exhibiting higher transparency.

Another aspect of the detailed description is to provide a refrigerator capable of easily recognizing foods stored therein without opening a door, and minimizing energy consumption due to heat transfer.

The invention is indicated in the independent claim. Further embodiments are indicated in the dependent claims.

To achieve these and other advantages and in accordance with the purpose of the present invention, as embodied and broadly described herein, there is provided a vacuum insulation glass panel including a pair of insulation glass stacked to face each other, a plurality of spacers to support the pair of insulation glass to be spaced apart from each other, and a sealing portion disposed along edges of the pair of insulation glass, the sealing portion bonding the pair of insulation glass and making a space between the pair of insulation glass air-tight, wherein the sealing portion comprises an epoxy-based sealant.

According to the invention the sealing portion comprises SiO₂.

The sealing portion may be made by coating the epoxy-based sealant on the pair of insulation glass and hardening the sealant at temperature of 50 to 100°C.

The sealing portion may be located between the pair of insulation glass, and also extend to come in contact with ends of the pair of insulation glass.

The vacuum insulation glass panel may further include an inner sealing portion located inside the sealing portion and made of a metal.

Here, the sealing portion and the inner sealing portion may be closely adhered to each other.

The inner sealing portion may include nickel plated layers coated on surfaces of the pair of insulation glass, respectively, and a soldering material filled between the nickel plated layers and containing argentum or copper.

The inner sealing portion may include a thin metal film closely adhered to an inner surface of the sealing portion and each of the pair of insulation glass.

The vacuum insulation glass panel may further include a gas blocking unit disposed inside the sealing portion to block an introduction of gas generated from the sealing portion.

Here, the gas blocking unit may be protruded from the insulation glass.

An end of the glass protrusion may be spaced apart from the surface of the insulation glass that the glass protrusion faces.

Here, the glass protrusion may be formed through an etching process.

The gas blocking unit may include a metallic guide disposed between the pair of insulation glass.

The metallic guide and the spacer may be made of the same material.

The spacer may be made of a transparent material.

In accordance with another aspect of this specification, there is provided a refrigerator including a cabinet, a plurality of storage spaces disposed within the cabinet, and refrigerator doors to open or close the plurality of storage spaces, wherein at least part of the refrigerator doors is configured as the aforementioned vacuum insulation glass panel.

### ADVANTAGEOUS EFFECT

In accordance with the aspects of the detailed description, the bonding of the glass panels using the epoxy-based sealant may result in remarkable reduction of a manufacturing time and the amount of heat transferred through a glass frit in the related art, thereby enhancing an insulation performance.

In addition, the sealing portion may extend to come in contact with side surfaces of the two sheets of glass panels, resulting in an extension of a heat transfer path and improvement of the insulation performance.

As the inner sealing portion may additionally be formed inside the sealing portion, the lowering of a vacuum level due to an introduction of external gas can be prevented, so as to stably maintain the insulation performance for a long term of time.

The employment of the gas blocking unit inside the sealing portion may allow further preventing of an introduction of gas generated from the sealing portion into an inner space. Also, the gas blocking unit may function as a type of spacer so as to derive reduction of the number of spacers needed in the central portion of the glass panels, which results in further improving transparency.

In addition, the spacer can be made of a transparent material, so as to further improve the vacuum level of the vacuum insulation glass panel.

### BRIEF DESCRIPTION OF THE DRAWINGS

FIG. 1 is a perspective view showing a refrigerator having a vacuum insulation glass panel according to a first exemplary embodiment;
FIG. 2 is a sectional view showing an inserted state of the vacuum insulation glass panel of the first exemplary embodiment inside the refrigerator;
FIG. 3 is a perspective view showing a variation of the first exemplary embodiment;
FIG. 4 is a planar view of the first exemplary embodiment;
FIG. 5 is a sectional view of the first exemplary embodiment;
FIG. 6 is a sectional view showing a variation of the first exemplary embodiment;
FIG. 7 is a sectional view showing another variation of the first exemplary embodiment;
FIG. 8 is a sectional view showing another variation of the first exemplary embodiment;
FIG. 9 is a sectional view showing another variation of the first exemplary embodiment;
FIG. 10 is a planar view showing that a coupling unit is configured in form of a single line in accordance with the first exemplary embodiment;
FIG. 11 is a planar view showing that the coupling unit is configured in form of multiple lines in accordance with the first exemplary embodiment;
FIG. 12 is a planar view showing that the coupling unit is configured in form of crossing lines in accordance with the first exemplary embodiment;
FIG. 13 is a sectional view showing a vacuum insulation glass panel in accordance with a second exemplary embodiment;
FIG. 14 is a sectional view showing a variation of the second exemplary embodiment;
FIG. 15 is a planar view showing a vacuum insulation glass panel in accordance with a third exemplary embodiment;
FIG. 16 is a sectional view of the third exemplary embodiment;
FIG. 17 is a sectional view showing a variation of the third exemplary embodiment;
FIG. 18 is a planar view showing a vacuum insulation glass panel in accordance with a fourth exemplary embodiment;
FIG. 19 is a sectional view of the fourth exemplary embodiment;
FIG. 20 is a sectional view showing a variation of the fourth exemplary embodiment;
FIG. 21 is a sectional view showing a vacuum insulation glass panel in accordance with a fifth exemplary embodiment;
FIG. 22 is an enlarged sectional view showing part A of FIG. 21;
FIG. 23 is an equivalent view of FIG. 22 showing a variation of the fifth exemplary embodiment;
FIG. 24 is an equivalent view of FIG. 22 showing another variation of the fifth exemplary embodiment;

### MODES FOR CARRYING OUT THE PREFERRED EMBODIMENTS

Embodiments of a vacuum insulation glass panel and a refrigerator having the same will be described below in detail with reference to the accompanying drawings where those components are rendered the same reference number that are the same or are in correspondence, regardless of the figure number, and redundant explanations are omitted. In describing the present invention, if a detailed explanation for a related known function or construction is considered to unnecessarily divert the gist of the present invention, such explanation has been omitted but would be understood by those skilled in the art. The accompanying drawings are used to help easily understood the technical idea of the present invention and it should be understood that the idea of the present invention is not limited by the accompanying drawings. The idea of the present invention should be construed to extend to any alterations, equivalents and substitutes besides the accompanying drawings.

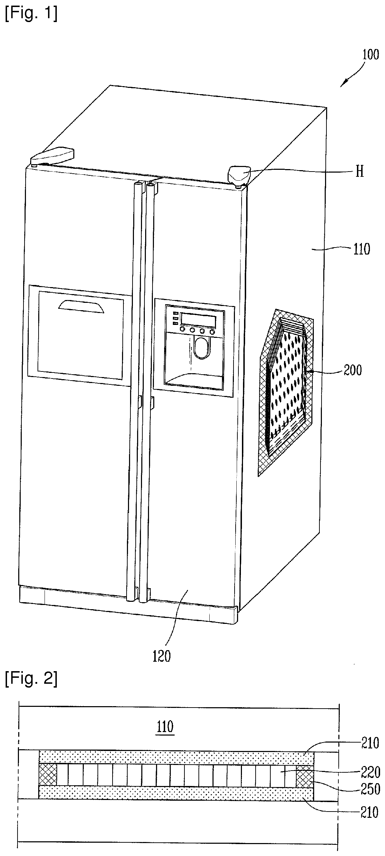

FIGS. 1 and 2 show a refrigerator having a vacuum insulation glass panel according to the first exemplary embodiment. The vacuum insulation glass panel 200 may be disposed in an outer wall of a main body 110 of a refrigerator 100 and a door 120 thereof to insulate an inner space of the refrigerator 100. In detail, referring to FIG. 1, the vacuum insulation glass panel 200 may be used in a state of being inserted inside the wall of the refrigerator. In addition to this structure, only the insulation glass panel 200 may be employed to configure a part or all of the door of the refrigerator. Upon installing the insulation glass panel 200 at the door of the refrigerator, foods stored in the refrigerator can be recognized without opening the door, thus increasing convenience in use. Also, the number of opening the door can be reduced, thereby minimizing an increase in power consumption due to a loss of cold air.

The refrigerator 100 may include a main body 110 having a freezing chamber and a refrigerating chamber partitioned from each other, and two doors 120 to open or close the freezing chamber and the refrigerating chamber, respectively. As aforementioned, one or both of the two doors may be configured as the insulation glass panel 200.

The doors 120 may be coupled to edges of the main body 110 by hinges so as to be rotatably open or closed, accordingly, the freezing chamber and the refrigerating chamber can be open or closed independent of each other. FIG. 1 shows, but not limited to, the two doors 120. Alternatively, even when a refrigerator has one door or more than three doors, the insulation glass panel 200 may be applied.

The vacuum insulation glass panel 200 may include a pair of insulation glass 210 stacked to face each other, a plurality of spacers 220 supporting the pair of insulation glass 210 to be spaced apart from each other, and a sealing portion 250 disposed along edges of the pair of insulation glass 210 to bond the pair of insulation glass 210 to each other and maintain a space between the pair of insulation glass 210 in an air-tight state.

The space between the pair of insulation glass 210 may be maintained in a vacuum state, and hereinafter, referred to as a vacuum layer VL. A plurality of spacers may be provided in the vacuum layer VL such that the two sheets of insulation glass 210 are kept spaced apart from each other, and hereinafter, referred to as a support area SA. Here, the spacers 220 may be made of stainless material.

The sealing portion 250 may be located between the pair of insulation glass 210, to prevent permeation (introduction) of external air such that the vacuum layer VL can be maintained in the vacuum state. The sealing portion 250 may be made of epoxy-based resin (epoxy resin), which will be described later.

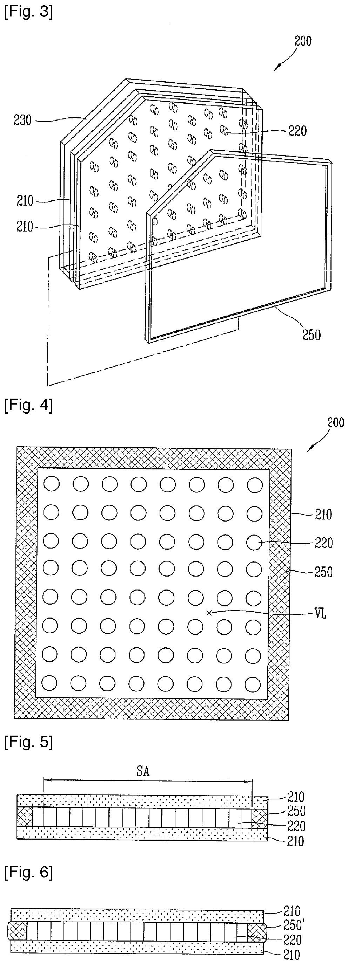

Referring to FIG. 3, an outer insulation glass 230 may further be provided at the outside of the pair of insulation glass 210, so as to further increase the insulation performance. A sealant may be filled between the outer insulation glass 230 and the insulation glass 210, which may accordingly be closely adhered to each other, thereby forming a gas filling space. Here, the gas filing space c may be filled with inactive gas. Alternatively, a vacuum insulation glass panel having a structure that the gas filling space is disposed at both side surfaces of the pair of insulation glass 210 may also be considered. An outer surface of the insulation glass 210 may additionally be processed through low radiation coating, thereby efficiently reducing heat transfer due to radiant heat.

As mentioned above, the sealing portion 250 may be made of the epoxy resin. The sealing portion 250 extends between two surfaces of the pair of insulation glass 210 facing each other, so the sealing portion itself may define a heat transfer path. Hence, in order to improve the insulation performance of the vacuum insulation glass panel, the sealing portion 250 should be made of a material having low heat conductivity, and it may be advantageous to take a short time for forming the sealing portion 250. The related art uses the glass frit as a material of the sealing portion. However, 6 to 12 hours may be taken to weld the sealing portion, thereby causing low productivity. On the contrary, the epoxy-based sealant is thermally hardened within two hours in a high temperature environment after being coated between the two sheets of insulation glass, whereby the manufacturing time can be remarkably reduced.

In addition, since the epoxy-based sealant has elasticity to some degree, it absorbs external impact to protect the insulation glass panel from destroy. Under a low temperature atmosphere, its rigidity is increased, accordingly, it is rarely deformed at any time. In particular, when the vacuum insulation glass panel is employed in the door of a refrigerator, the epoxy-based sealant can provide sufficient rigidity by virtue of the low inner temperature of the refrigerator.

Here, the sealing portion 250 may be hardened at a heating temperature in the range of about 50 to 100°C.

In addition, the epoxy-based sealant forming the sealing portion 250 comprises SiO₂.The SiO₂ exhibits low thermal expansion at high temperature, so a shape deformation due to expansion during the thermal hardening process can be minimized. The SiO₂ may also increase a bonding force within the sealant so as to improve rigidity and thermal endurance of the sealing portion.

The sealing portion 250 may be 1 to 10 mm in width.

FIG. 6 shows a variation of the first exemplary embodiment. Hereinafter, the similar/like components to the first exemplary embodiment will have the same reference numerals, and repeated description will be omitted.

Referring to FIG. 6, the variation is different from the first exemplary embodiment in that an outer edge of a sealing portion 250' is externally protruded rather than side surfaces of the pair of insulation glass 210. The protruded sealing portion 250' may function to improve the insulation performance and protect the insulation glass panels from impact applied from a side direction of the panels.

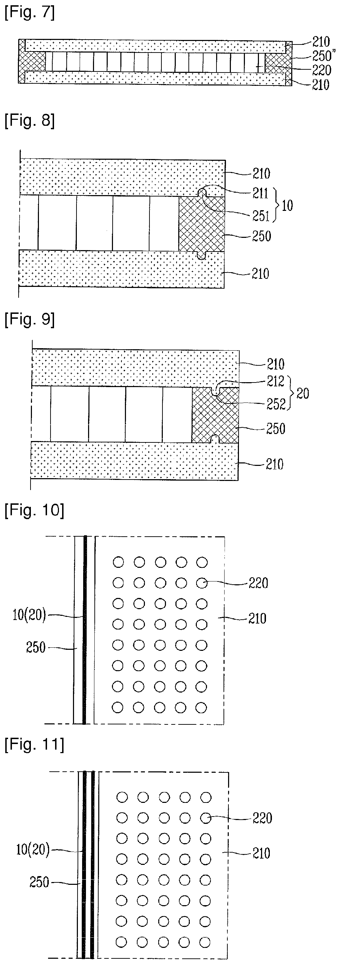

The sealing portion may be formed as shown in FIG. 7. That is, in accordance with the variation shown in FIG. 7, a sealing portion 250" may be protruded from edges of the pair of insulation glass 210 to cover outer surfaces of the pair of insulation glass 210.

As the sealing portion 250" covers the outer surfaces, airtightness can be improved and the pair of insulation glass 210 can be supported more stably.

Referring to FIGS. 8 and 9, a coupling unit may further be disposed to more improve the bonding strength between the sealing portion and the pair of insulation glass.

Referring to FIG. 8, the coupling unit 10 may include a coupling recess 211 formed at a surface of each insulation glass 210, and a coupling protrusion 251 formed at the sealing portion 250 and engaged with the corresponding coupling recess 211. The coupling protrusion 251 may be formed by hardening a sealant, which has been filled in the coupling recess 211 during the sealant coating. Consequently, the coupling protrusion 251 can further increase the bonding strength between the insulation glass and the sealing portion.

The coupling recess and the coupling protrusion may be formed vice versa as shown in FIG. 9. That is, a coupling protrusion 212 may be formed at each insulation glass 210 and a coupling recess 252 may be formed at the sealing portion 250 so as to function as a coupling unit 20.

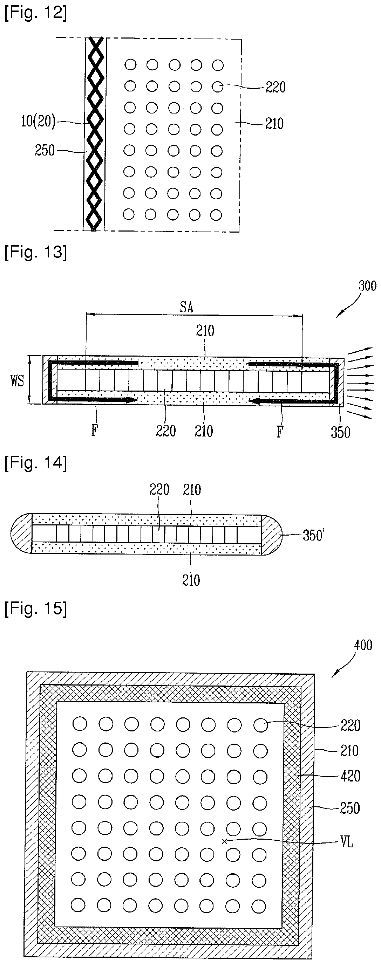

The coupling unit 10, 20 may be in form of a line as shown in FIG. 10, in form of a pair of lines in parallel as shown in FIG. 11, or in form of lines crossing each other as shown in FIG. 12.

As aforementioned, the sealing portion itself can define one heat transfer path. Thus, for minimization of heat transfer through the sealing portion, the sealing portion may extend as long as possible to make the heat transfer path long.

To this end, referring to FIG. 13, in accordance with a second exemplary embodiment of a vacuum insulation glass panel 300, a sealing portion 350 may extend to cover side surfaces of the pair of insulation glass 210, thereby extending a heat transfer path F through the sealing portion 350. That is, according to the third exemplary embodiment, the height WS of the sealing portion 350 may be greater than an interval between the pair of insulation glass 210, to extend the heat transfer path F through the sealing portion 350, thereby minimizing the heat transfer amount.

The sealing portion, referring to FIG. 14, may have side surfaces formed curved, so as to improve a bending strength.

In the meantime, the sealing portion may be formed of the epoxy sealant, as aforementioned. As a time elapses, gas is generated from the sealing portion, and the generated gas causes the vacuum level (vacuum degree, vacuum rate) inside the vacuum layer to be lowered. Once the vacuum level inside the vacuum layer is lowered, heat conductivity is increased. Hence, for maintenance of the insulation performance, there is a need to minimize the gas introduction into the vacuum layer.

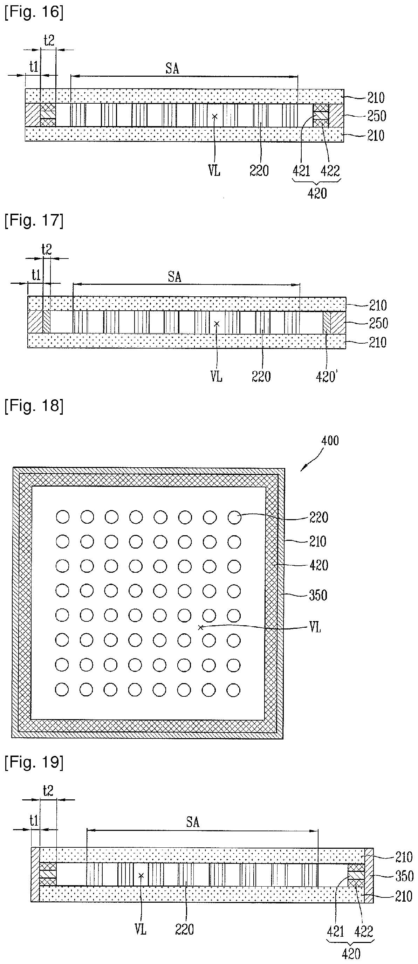

To this end, referring to FIGS. 15 and 16, the vacuum insulation glass panel according to the third exemplary embodiment may further include an inner sealing portion 420 formed inside the sealing portion 250. The inner sealing portion 420 may block introduction of not only gas generated from the sealing portion 250 but also external air.

The inner sealing portion 420 may be located inside the sealing portion 250 between the pair of insulation glass 210. The inner sealing portion 420 may be made of a metal. In addition, the inner sealing portion 420 may be closely adhered to the sealing portion 250. Consequently, the gas generated from the sealing portion 250 can be blocked by the inner sealing portion 420 and redirected toward the outside of the insulation glass 210, so as to be prevented from being introduced into the vacuum layer.

In detail, the inner sealing portion 420 may be configured with multiple metal layers. The multiple metal layers may include an argentum/copper-based soldering material 421 formed at the center and having a predetermined thickness, and nickel plated layers 422 formed at upper and lower ends of the argentums/copper-based soldering material 421 and each having a predetermined thickness.

Here, a thickness t1 of the sealing portion 250 and a thickness t2 of the inner sealing portion 420 may be the same, or the thickness t2 of the inner sealing portion 420 may be set to be greater than the thickness t1 of the sealing portion 250. As one example, the thickness of the inner sealing portion 420 may be in the range of 5-500 *µ*m.

The exemplary embodiment shows the inner sealing portion having the multiple metal layers, but may not be limited to the structure. As shown in FIG. 17, an inner sealing portion 420' may include one metal layer. FIG. 17 shows the inner sealing portion 420' formed using one thin metal film.

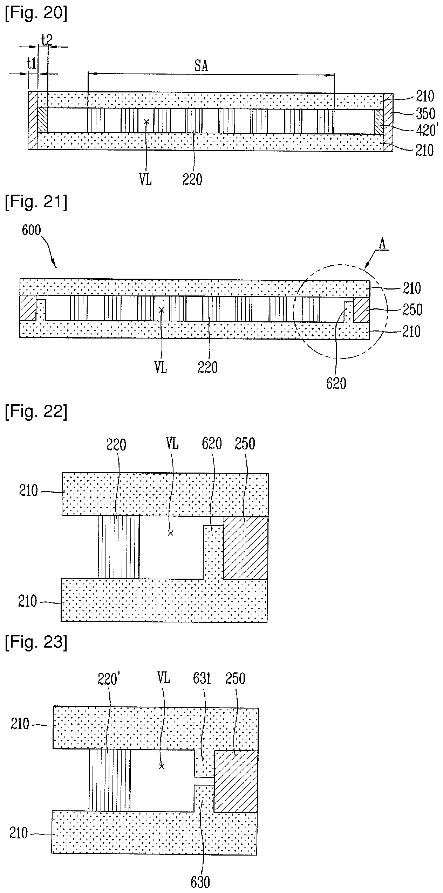

The inner sealing portion may be provided together with the sealing portion shown in the second exemplary embodiment. That is, a vacuum insulation glass panel 500 according to the fourth exemplary embodiment shown in FIGS. 18 and 19 may include the inner sealing portion 420 shown in FIG. 16 and the sealing portion 350 according to the second exemplary embodiment. Also, the vacuum insulation glass panel according to a variation of the fourth exemplary embodiment shown in FIG. 20 may include the inner sealing portion 420' shown in FIG. 17 and the sealing portion 350 according to the second exemplary embodiment. With this configuration, the gas blocking capability can be enhanced and also the heat transfer path can be extended, thereby enhancing the insulation performance. Also, the inner sealing portion can improve a lateral bending rigidity of the sealing portion 350.

Alternatively, a gas blocking unit may further be provided instead of the metallic inner sealing portion.

FIG. 21 is a sectional view of a vacuum insulation glass panel according to a fifth exemplary embodiment. As shown in FIG. 21, the vacuum insulation glass panel 600 according to the fifth exemplary embodiment may further include a glass protrusion 620 as a gas blocking unit formed inside the sealing portion 250. The glass protrusion 620 may separately formed to be attached onto the insulation glass, or integrally formed with the insulation glass.

The glass protrusion 620 may function as the blocking unit for blocking gas leakage from the sealing portion 250, and additionally act to prevent the sealant from being coated into the area corresponding to the vacuum layer when forming the sealing portion. Here, the glass protrusion 620 has high hardness and low flexibility due to the material property, so it may be vulnerable to pressing by the insulation glass when the sealing portion is contracted due to heat-shrink. Therefore, the upper portion of the glass protrusion 620 may be spaced apart from the surface of the insulation glass 210 that the glass protrusion 620 faces.

In addition, as shown in FIG. 23, a pair of glass protrusions 630 and 631 may be formed spaced from each other.

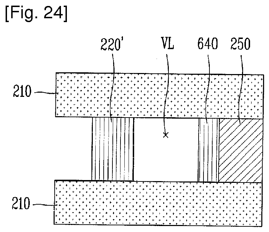

The gas blocking unit in the fifth exemplary embodiment may be implemented by a metallic guide made of a metal, other than the glass protrusion. That is, referring to FIG. 24, a metallic guide 640 may further be provided. The metallic guide 640 may be formed inside the sealing portion 250 to extend along the edge of the insulation glass and have a section in a rectangular form. The metallic guide 640 may function as the gas blocking unit, and additionally serve as a support unit, namely, a spacer for supporting the pair of insulation glass with being interposed between the pair of insulation glass.

Therefore, it may be possible to reduce the number of spacers disposed inside the vacuum layer, and accordingly areas shielded by the spacers can be decreased, thereby enhancing the transparency of the vacuum insulation glass panel.

Meanwhile, as mentioned above, the spacer is typically made of a metal, but it may also be possible to use a transparent spacer made of acryl resin or epoxy resin.

## Claims

1. A vacuum insulation glass panel comprising:
a pair of insulation glass (210) stacked to face each other;
a plurality of spacers (220, 220') to support the pair of insulation glass (210) to be spaced apart from each other; and
a sealing portion (250, 250', 250", 350, 350') disposed along edges of the pair of insulation glass (210), the sealing portion (250) bonding the pair of insulation glass (210) and making a space between the pair of insulation glass (210) air-tight,
wherein the sealing portion (250, 250', 250", 350, 350') comprises an epoxy-based sealant,
**characterized in that**
the sealing portion (250, 250', 250", 350, 350') further comprises SiO₂.

2. The panel of claim 1, wherein the sealing portion (250, 250', 250", 350, 350') is located between the pair of insulation glass (210).

3. The panel of claim 1 or 2, wherein the sealing portion (250", 350, 350') extends to come in contact with side ends of the pair of insulation glass (210).

4. The panel of any one of claims 1 to 3, further comprising an inner sealing portion (420, 420') located inside the sealing portion (250, 250', 250", 350, 350') and made of a metal.

5. The panel of claim 4, wherein the sealing portion (250, 250', 250", 350, 350') and the inner sealing portion (420, 420') are closely adhered to each other.

6. The panel of claim 4, wherein the inner sealing portion (420) comprises:
nickel plated layers (422) coated on surfaces of the pair of insulation glass (210), respectively; and
a soldering material (421) filled between the nickel plated layers (422) and containing argentum or copper.

7. The panel of claim 4, wherein the inner sealing portion (420') comprises a thin metal film closely adhered to an inner surface of the sealing portion (250, 250', 250", 350, 350') and each of the pair of insulation glass (210).

8. The panel of any one of claims 1 to 7, further comprising a gas blocking unit disposed inside the sealing portion (250, 250', 250", 350, 350') to block an introduction of gas generated from the sealing portion (250, 250', 250", 350, 350').

9. The panel of claim 8, wherein the gas blocking unit comprises a glass protrusion (620, 630, 631) protruded from the insulation glass (210).

10. The panel of claim 9, wherein an end of the glass protrusion (620, 630, 631) is spaced apart from the surface of the insulation glass (210) that the glass protrusion (620, 630, 631) faces.

11. The panel of claim 8, wherein the gas blocking unit comprises a metallic guide (640) disposed between the pair of insulation glass (210).

12. The panel of claim 11, wherein the metallic guide (640) and the spacer (220, 220') are made of the same material.

13. The panel of any one of claims 1 to 12, wherein the spacer (220') is made of a transparent material.

14. A refrigerator (100) comprising:
a cabinet (100);
a plurality of storage spaces disposed within the cabinet; and
refrigerator doors (120) to open or close the plurality of storage spaces,
wherein at least part of the refrigerator doors (120) is configured as a vacuum insulation glass panel (200, 300, 500, 600) according to one of claims 1 to 13.

## Patentansprüche

1. Vakuumisolierglasplatte, die Folgendes umfasst:
ein Paar Isolierglasscheiben (210), die so gestapelt sind, dass sie einander zugewandt sind;
mehrere Abstandselemente (220, 220'), um das Paar Isolierglasscheiben (210) so zu halten, dass die Glasscheiben voneinander beabstandet sind; und
einen Dichtungsabschnitt (250, 250', 250", 350, 350'), der entlang der Kanten des Paars Isolierglasscheiben (210) angeordnet ist, wobei der Dichtungsabschnitt (250) das Paar Isolierglasscheiben (210) verbindet und dafür sorgt, dass ein Zwischenraum zwischen dem Paar Isolierglasscheiben (210) luftdicht ist,
wobei der Dichtungsabschnitt (250, 250', 250", 350, 350') ein Dichtungsmittel auf Epoxidbasis umfasst,
**dadurch gekennzeichnet, dass**
der Dichtungsabschnitt (250, 250', 250", 350, 350') ferner SiO₂ enthält.

2. Platte nach Anspruch 1, wobei der Dichtungsabschnitt (250, 250', 250", 350, 350') zwischen dem Paar Isolierglasscheiben (210) angeordnet ist.

3. Platte nach Anspruch 1 oder 2, wobei sich der Dichtungsabschnitt (250", 350, 350') so erstreckt, dass er mit seitlichen Enden des Paars Isolierglasscheiben (210) in Kontakt gelangt.

4. Platte nach einem der Ansprüche 1 bis 3, die ferner einen inneren Dichtungsabschnitt (420, 420') umfasst, der in dem Dichtungsabschnitt (250, 250', 250", 350, 350') angeordnet ist und aus einem Metall hergestellt ist.

5. Platte nach Anspruch 4, wobei der Dichtungsabschnitt (250, 250', 250", 350, 350') und der innere Dichtungsabschnitt (420, 420') dicht aneinander haften.

6. Platte nach Anspruch 4, wobei der innere Dichtungsabschnitt (420) Folgendes umfasst:
vernickelte Lagen (422), die jeweils auf Oberflächen des Paars Isolierglasscheiben (210) abgeschieden sind; und
ein Lötmaterial (421), das zwischen die vernickelten Lagen (422) gefüllt ist und Silber oder Kupfer enthält.

7. Platte nach Anspruch 4, wobei der innere Dichtungsabschnitt (420') eine dünne Metallschicht umfasst, die dicht an einer inneren Oberfläche des Dichtungsabschnitts (250, 250', 250", 350, 350') und an jeder Scheibe des Paars Isolierglasscheiben (210) haftet.

8. Platte nach einem der Ansprüche 1 bis 7, die ferner eine Einheit zum Blockieren von Gas umfasst, die in dem Dichtungsabschnitt (250, 250', 250", 350, 350') angeordnet ist, um ein Eintreten von Gas, das von dem Dichtungsabschnitt (250, 250', 250", 350, 350') erzeugt wird, zu blockieren.

9. Platte nach Anspruch 8, wobei die Einheit zum Blockieren von Gas einen Glasvorsprung (620, 630, 631) umfasst, der von dem Isolierglas (210) vorsteht.

10. Platte nach Anspruch 9, wobei ein Ende des Glasvorsprungs (620, 630, 631) von der Oberfläche des Isolierglases (210), zu der der Glasvorsprung (620, 630, 631) zeigt, beabstandet ist.

11. Platte nach Anspruch 8, wobei die Einheit zum Blockieren von Gas eine metallische Führung (640) umfasst, die zwischen dem Paar Isolierglasscheiben (210) angeordnet ist.

12. Platte nach Anspruch 11, wobei die metallische Führung (640) und das Abstandselement (220, 220') aus dem gleichen Material hergestellt sind.

13. Platte nach einem der Ansprüche 1 bis 12, wobei das Abstandselement (220') aus einem lichtdurchlässigen Material hergestellt ist.

14. Kühlschrank (100), der Folgendes umfasst:
ein Gehäuse (100);
mehrere Vorratsräume, die in dem Gehäuse angeordnet sind; und
Kühlschranktüren (120) zum Öffnen oder Schließen der mehreren Vorratsräume,
wobei wenigstens ein Teil der Kühlschranktüren (120) als eine Vakuumisolierglasplatte (200, 300, 500, 600) nach einem der Ansprüche 1 bis 13 konfiguriert ist.

## Revendications

1. Panneau en verre d'isolation sous vide comprenant :
une paire de verres d'isolation (210) empilés pour se faire face l'un à l'autre ;
une pluralité d'entretoises (220, 220') pour supporter la paire de verres d'isolation (210) pour qu'ils soient espacés l'un de l'autre ; et
une portion d'étanchéité (250, 250', 250", 350, 350') disposée le long de bords de la paire de verres d'isolation (210), la portion d'étanchéité (250) liant la paire de verres d'isolation (210) et rendant un espace entre la paire de verres d'isolation (210) hermétique à l'air,
dans lequel la portion d'étanchéité (250, 250', 250", 350, 350') comprend un mastic à base d'époxy,
**caractérisé en ce que**
la portion d'étanchéité (250, 250', 250", 350, 350') comprend en outre du SiO₂.

2. Panneau selon la revendication 1, dans lequel la portion d'étanchéité (250, 250', 250", 350, 350') est située entre la paire de verres d'isolation (210).

3. Panneau selon la revendication 1 ou 2, dans lequel la portion d'étanchéité (250", 350, 350') s'étend pour venir au contact d'extrémités latérales de la paire de verres d'isolation (210).

4. Panneau selon l'une quelconque des revendications 1 à 3, comprenant en outre une portion d'étanchéité intérieure (420, 420') située à l'intérieur de la portion d'étanchéité (250, 250', 250", 350, 350') et constituée d'un métal.

5. Panneau selon la revendication 4, dans lequel la portion d'étanchéité (250, 250', 250", 350, 350') et la portion d'étanchéité intérieure (420, 420') sont étroitement adhérées l'une à l'autre.

6. Panneau selon la revendication 4, dans lequel la portion d'étanchéité intérieure (420) comprend :
des couches plaquées nickel (422) enduites respectivement sur des surfaces de la paire de verres d'isolation (210) ; et
un matériau de soudage (421) rempli entre les couches plaquées nickel (422) et contenant de l'argent ou du cuivre.

7. Panneau selon la revendication 4, dans lequel la portion d'étanchéité intérieure (420') comprend un film de métal mince adhéré étroitement à une surface intérieure de la portion d'étanchéité (250, 250', 250", 350, 350') et à chacun de la paire de verres d'isolation (210).

8. Panneau selon l'une quelconque des revendications 1 à 7, comprenant en outre une unité de blocage de gaz disposée à l'intérieur de la portion d'étanchéité (250, 250', 250", 350, 350') pour bloquer une introduction de gaz généré à partir de la portion d'étanchéité (250, 250', 250", 350, 350').

9. Panneau selon la revendication 8, dans lequel l'unité de blocage de gaz comprend une protubérance de verre (620, 630, 631) faisant saillie depuis le verre d'isolation (210).

10. Panneau selon la revendication 9, dans lequel une extrémité de la protubérance de verre (620, 630, 631) est espacée de la surface du verre d'isolation (210) auquel la protubérance de verre (620, 630, 631) fait face.

11. Panneau selon la revendication 8, dans lequel l'unité de blocage de gaz comprend un guide métallique (640) disposé entre la paire de verres d'isolation (210).

12. Panneau selon la revendication 11, dans lequel le guide métallique (640) et l'entretoise (220, 220') sont constitués du même matériau.

13. Panneau selon l'une quelconque des revendications 1 à 12, dans lequel l'entretoise (220') est constituée d'un matériau transparent.

14. Réfrigérateur (100) comprenant :
une armoire (100) ;
une pluralité d'espaces de rangement disposés à l'intérieur de l'armoire ; et
des portes de réfrigérateur (120) pour ouvrir ou fermer la pluralité d'espaces de rangement,
dans lequel au moins une partie des portes de réfrigérateur (120) est configurée en tant qu'un panneau en verre d'isolation sous vide (200, 300, 500, 600) selon l'une des revendications 1 à 13.
